# EUROPEAN PATENT SPECIFICATION

(11) **EP 0 682 342 B1**
(45) Date of publication and mention of the grant of the patent: **22.09.1999**
(21) Application number: 95105842.9
(22) Date of filing: 19.04.1995
(51) Int. Cl.: G11B 23/037, G11B 23/087

(54) **Tape reel having air discharging grooves formed in flange**
Bandspule mit in einem Flansch geformten Luftauslassschlitzen
Bobine de bande comportant des rainures de déchargement d'air formées dans un flasque

(30) Priority: 20.04.1994 JP 6544394 U
(43) Date of publication of application: 15.11.1995
(73) Proprietor: FUJI PHOTO FILM CO., LTD., Kanagawa-ken (JP)
(72) Inventor: Nakane, Takanobu, c/o Fuji Photo Film Co., Ltd., Odawara-shi, Kanagawa (JP); Morita, Kiyoo, c/o Fuji Photo Film Co., Ltd., Odawara-shi, Kanagawa (JP)
(74) Representative: Grünecker, Kinkeldey, Stockmair & Schwanhäusser Anwaltssozietät

(56) References cited:
- EP-A- 0 136 504
- EP-A- 0 588 219
- PATENT ABSTRACTS OF JAPAN vol. 017 no. 550 (P-1624) ,4 October 1993 & JP-A-05 151743 (HITACHI MAXELL LTD) 18 June 1993,

## Description

The present invention is directed to a tape reel according to the precharacterizing portion of claim 1 as well as to a tape cassette as specified in the precharacterizing portion of claim 6.

A corresponding tape reel and tape cassette is known from EP-A-0 136 504, which discloses a recording tape cartridge having a pair of tape reels for winding a recording tape. This tape reel comprises a lower flange member which is provided with a plurality of radial grooves on an upper side of said lower flange member. Said lower flange member is further provided with a plurality of projected ribs which are formed on opposite sides of radial grooves on said lower flange. Said grooves and said projected ribs are formed so as to achieve an improved molding process when forming said tape reel from a plastic resin material.

From JP-A-51 517 43 there is known a tape reel and a magnetic tape cartridge including such a tape reel, wherein said tape reel is provided with a number of grooves for facilitating the outflow of air between the respective windings of the magnetic tape upon winding same on said tape reel. In an end section of said recesses facing towards the center of said tape reel, a number of through openings are formed to allow an air-inflow of air into said recesses so as to facilitate an unwinding operation.

Conventionally, with regard to magnetic tape cassettes used, for example, in VTRs, there are various types of systems such as the β system, the VHS system, etc. They are, however, roughly similar in basic design such that a magnetic tape is wound on a pair of tape reels, and is stored inside a cassette.

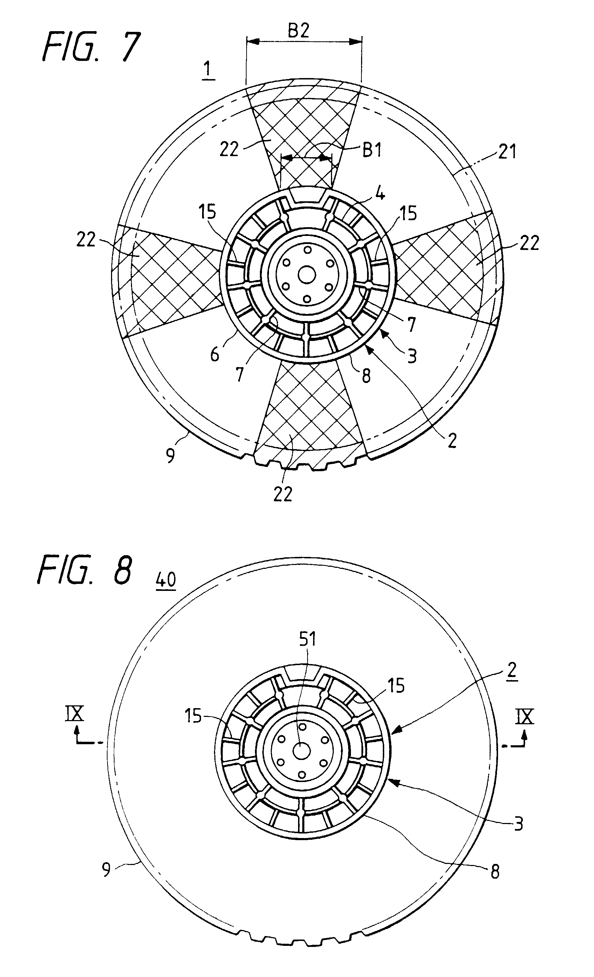

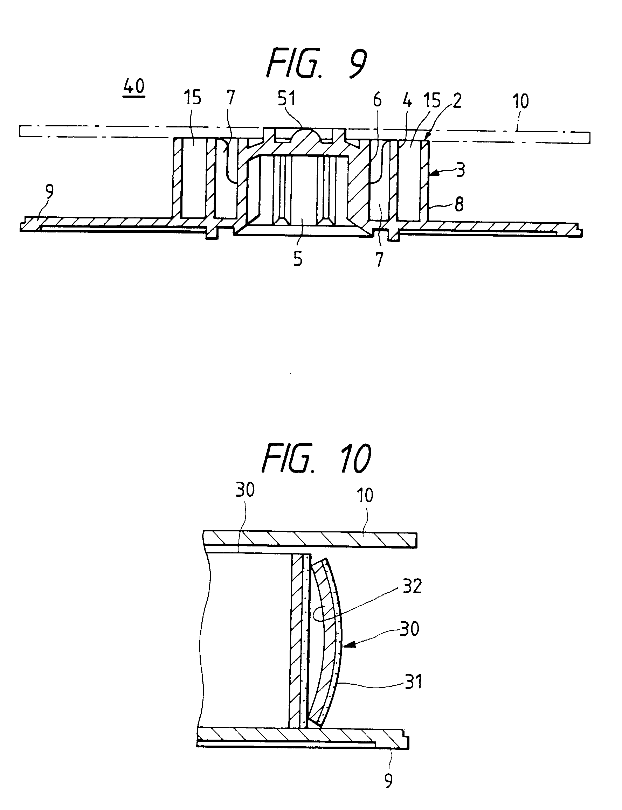

The basic design of a tape reel used with magnetic tape is shown in Figs. 8 and 9. With regard to the tape reel 40, a tape winding drum 2 on which a magnetic tape is wound is constituted by a plurality of concentric cylindrical parts which includes: a tubular inner cylinder 6 which engages with a rotational drive shaft of a VTR; an outer cylinder 3 which is positioned to the outer side of the inner cylinder 6 and which constitutes a tape winding outer surface 8; and a middle cylinder 4 which is arranged, according to necessity, between the outer cylinder 3 and the inner cylinder 6. Between the inner cylinder 6 and the outer cylinder 3, a plurality of reinforcing ribs 7, 15, etc. are suitably provided along the radial direction of the tape reel 40. Furthermore, above and below the tape winding drum 2, upper and lower flanges 10 and 9 are provided so as to conduct tape protection, such as, for example, prevention of winding turbulence or winding breakage of the magnetic tape.

In many cases, the lower flange 9 is integrally molded to the tape winding drum 2, while the upper flange 10 is separately molded and then attached and combined to the upper end of the tape winding drum 2 to form the tape reel. This is because, for the reasons explained below, the materials of the upper and lower flanges 10 and 9 are different from each other. That is, with regard to the lower flange 9, since a reel brake means engages at engaging teeth formed on its periphery, since the rotational drive shaft of the VTR engages at the inner cylinder 6, since a leaf spring, which is designed to energize the tape reel 40 downwardly, engages at a projection 51 provided on the top of the inner cylinder 6, and so on, a high mechanical strength is required. For this reason, the lower flange 9 is integrally molded with resin such as polyoxymethylene (POM), high-impact polystyrene (HIPS), or the like. In contrast, with regard to the upper flange 10, since it is not required to be as strong as the lower flange 9, and since it must have permeability to light so as to allow viewing by a user of the winding state of the magnetic tape from the outside, it is formed from a material, different from the lower flange 9, such as acrylonitrile styrene (AS), general-purpose polystyrene (GPPS), or the like, which is comparatively inexpensive.

At the time of manufacture of the magnetic tape cassette, the quality of the winding attitude of the magnetic tape constitutes a problem. Conventionally, in order to improve the winding attitude, winding has been conducted while the upper edge of the magnetic tape is pressed down, for example, by tape-like unwoven cloth toward the lower flange 9 side, or as described in U.S. Patent 4,857,388, the winding has been conducted while the magnetic tape is urged down by means of a magnet arranged at the bottom of the lower flange 9 so that the magnet attracts magnetic material spread on the magnetic tape.

In addition, the magnetic tape is wound under the condition that the lower edge of the magnetic tape is lowered onto the inner surface of the lower flange 9 in advance by means of a tape guide with a collar arranged at the entry side of the magnetic tape. According to this method, the winding is conducted while the upper edge of the magnetic tape is made even by bringing the lower edge of the magnetic tape into contact with the inner surface of the lower flange 9. By this means, it is intended to realize a good winding attitude.

According to the aforementioned magnetic tape winding methods, however, although it is possible to have a good winding attitude in the case where the winding speed of the magnetic tape is comparatively low, it is difficult to prevent turbulence in the winding attitude in the case where the winding speed is high, for example, when the winding speed reaches a level of 10 m/s or higher which is as high as in the fast-forward mode or rewind mode. This is because, if the winding speed of the magnetic tape becomes high, when the oncoming magnetic tape portion is wound upon the already wound magnetic tape portion, air interposed between the magnetic tape portion is abruptly compressed and a lubrication action occurs, with the result that the magnetic tape portion which is subsequently wound tends to be displaced by any vibrations, or the like, toward the upper flange 10 side where there is some clearance or space.

In particular, as shown in Fig. 10, a normal magnetic tape 30 is provided with magnetic material 31 on one face of a base film 32, and exhibits the property of cupping which causes concave curving on the base film 32 side. As a result, when the magnetic tape 30 is wound, it often tends to swell with air. Consequently, in the state where the cupping phenomenon is present, the winding attitude tends to become poor due to the lubrication action by the accompanying air.

In the conventional tape reel, in order to prevent this winding turbulence of the magnetic tape 30 from occurring at the time of high-speed winding, concave grooves, which are designed to discharge the air interposed between portions of the magnetic tape 30 toward the outer peripheries of the upper and lower flanges 10 and 9, are provided in the inner surface of either one of or both of the upper and lower flanges 10 and 9.

However, it has not been accurately understood whether or not the conventional grooves unfailingly discharge the air interposed between portions of the magnetic tape 30, and presently such grooves are simply formed without performing any research whatsoever concerning their size and shape, and so on.

In fact, the grooves of the conventional tape reel is constituted by disposing three to six grooves each having a narrow width and a groove opening ratio as described below is just 10% or so at the largest. For the reason, the conventional tape reel is disadvantageous in that the winding attitude has been poor when the magnetic tape is wound on such a tape reel.

### SUMMARY OF THE INVENTION

The present invention was made in light of the above problem. An object of the present invention is to provide a standard value for the opening area of the air discharge grooves which are provided in the inner surface of either one of or both of the upper and lower flanges, and to provide a tape reel which is able to unfailingly realize a good winding attitude even in the case of high-speed winding of the magnetic tape.

According to the present invention, the above identified objective has been performed by a tape reel and a tape cassette as specified in claims 1 and 6, respectively.

Preferred further developments of this tape reel and this tape cassette are evident from the respective dependent claims.

### BRIEF DESCRIPTION OF THE DRAWINGS

The above objects and advantages of the present invention will become more apparent by describing in detail a preferred embodiment thereof with reference to the accompanying drawings, in which:
Fig. 1 is a plan view of a tape reel which is an embodiment of the present invention;
Fig. 2 is a vertical cross-sectional view which is cut along the line II-II of Fig. 1.
Figs. 3(A) and 3(B) are vertical cross-sectional views which are cut along the line III-III of Fig. 1 and which show variations of the shape of the upper end edges of the grooves;
Fig. 4 is a graph which shows the relationship between the groove opening ratio *α* and the winding attitude evaluation;
Fig. 5 is a drawing which shows the state before discharge of the air between portions of the magnetic tape of the embodiment;
Fig. 6 is a drawing which shows the state after discharge of the air between portions of the magnetic tape of the embodiment;
Fig. 7 is a plan view of another embodiment of the present invention;
Fig. 8 is a plan view of a conventional tape reel;
Fig. 9 is a vertical cross-sectional view which is cut along the line 9-9 of Fig. 8; and
Fig. 10 is a schematic cross-sectional view to show the action of cupping of the magnetic tape.

### DETAILED DESCRIPTION OF THE PREFERRED EMBODIMENTS

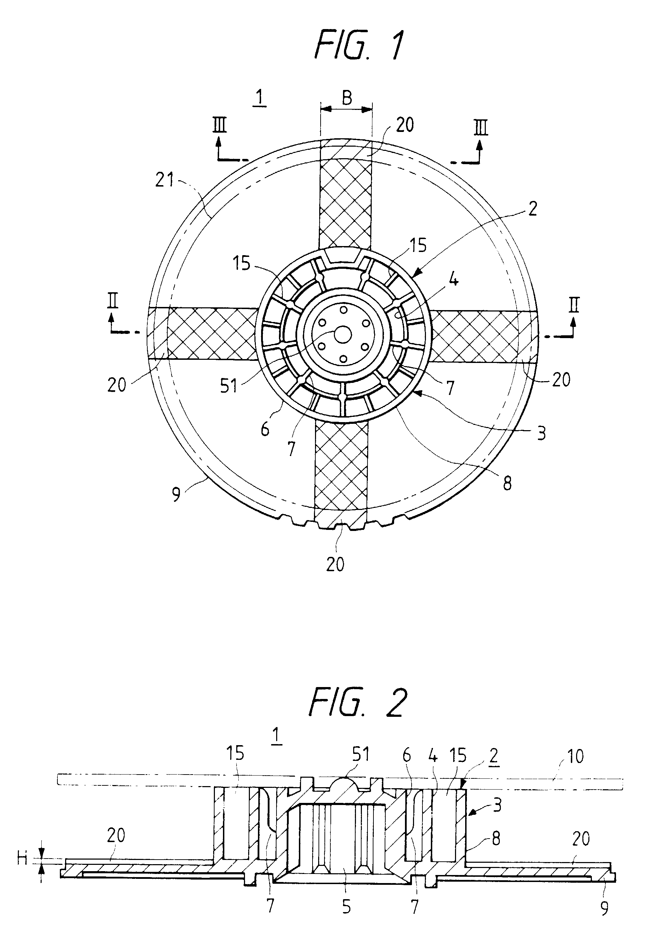

Below, an embodiment of the present invention is explained with reference to the drawings. With regard to parts which are identical to the conventional tape reel, the same reference numbers are applied, and a detailed explanation thereof is omitted. Fig. 1 is a plan view of a tape reel 1 for a magnetic tape, according to the present embodiment. Fig. 2 is a vertical cross-sectional view along the line 2-2 of Fig. 1.

With regard to the tape reel 1 of the present embodiment, a tape winding drum 2 (core) is provided with a plurality of concentric cylindrical parts including: an inner cylinder 6 which is provided with an engagement hole 5 that engages with, for example, a rotational drive shaft of a VTR, etc.; a middle cylinder 4 which is provided at the outside of the inner cylinder 6 and which is concentrically spaced a suitable clearance from it; and an outer cylinder 3 which is provided further to the outside in a concentric manner relative to the middle cylinder 4 and which constitutes a tape winding face 8. In addition, the middle cylinder 4 and the outer cylinder 3 are connected to each other through a plurality of reinforcing ribs 15 which are provided along the radial direction of the tape reel 1, and the inner cylinder 6 and the middle cylinder 4 are connected to each other through the reinforcing ribs 7. A lower flange 9 is molded integrally with the lower end of the tape winding drum 2. On the other hand, a transparent upper flange 10 is separately molded and fastened to the upper end of the tape winding drum 2. A magnetic tape is wound so that it contacts the inner surface of the lower flange 9, and so that a slight clearance is made between the upper flange 10 and the magnetic tape.

The above configuration is identical to the conventional one, but the characteristic configuration of the tape reel 1 of the present embodiment is such that, as shown by the hatched parts of Fig. 1, grooves 20 designed to discharge the air interposed between portions of the magnetic tape to the outer periphery of the tape reel 1 are formed to a specified size in the inner surface of the lower flange 9 which contacts the magnetic tape. Here, four grooves 20 are provided at equal intervals along the circumferential direction of the flange 9 from the innermost periphery to the outermost periphery of the lower flange 9, but it is acceptable to have at least one or more of the grooves 20.

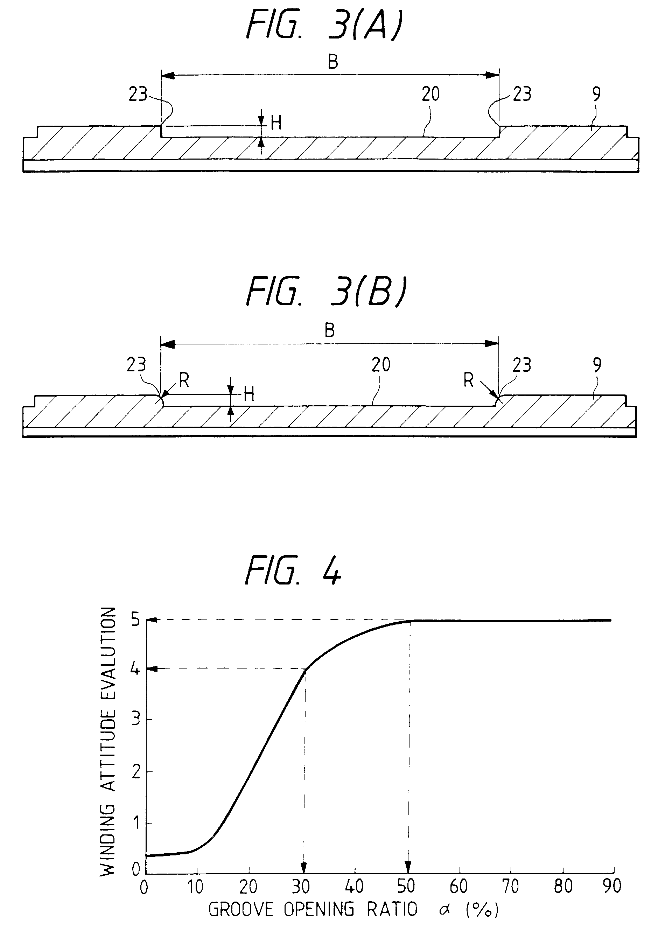

The width B of each of the grooves 20 is identical from the inner periphery to the outer periphery of the flange 9. Upper end edges 23 of the grooves 20 may be made perpendicular to eliminate burrs as shown in Fig. 3(A), or may be rounded as at R as shown in Fig. 3(B). In this way, it is possible to prevent the situation where the magnetic tape is caught and damaged by the upper end edges 23 of the grooves 20.

The total area of the tape winding range (hereinafter referred merely as Tt) is a ring-like area in which, when viewed in the vertical direction on a plane of the lower flange, a maximum tape winding range 21 (double-dotted line) of the magnetic tape serves as an outer periphery whereas the tape winding surface 8 of the outer cylinder 3 serves as an inner periphery. On the other hand, the total opening area (hereinafter refereed merely as Tg) is an area of a part of the grooves 20 which overlaps the total area of the tape winding range, i.e., a part of the grooves 20 which is cross-hatched in Fig. 1.

As a result of observing winding attitudes when the magnetic tapes were wound while making various changes in the ratio of the total opening area of all the grooves (Tg) lying within the tape winding range 21 to the total area of the tape winding range (Tt), that is, the groove opening ratio α (=Tg/Tt × 100) , their relations were found to be as shown in Fig. 4. In Fig. 4, the horizontal axis is the groove opening ratio α (%), and the vertical axis is the winding attitude evaluation (grades). With regard to the winding attitude evaluation, winding turbulence where the tape edge partially projects out was classified into 5 stages; evaluation grade "4" indicates a situation where no winding turbulence can be noted with the naked eye, and in practical terms is a very preferable state.

When the winding attitude evaluation was observed in the case of the standard value of grade "4", it was found that the opening ratio α of the grooves 20 was 30 percent. Moreover, it was found that an opening ratio α constituting an evaluation of "5" where winding turbulence does not occur at all was 50 percent or higher. Even if the opening ratio is much larger than 50%, the winding attitude maintains the evaluation 5 indicated above.

As described above, the opening ratio is effective if it is within a range of 30% to 98%, and preferably within a range of 40% to 80% and more preferably within a range of 50% to 70%.

Fig. 4 shows the case where the tape width was 12.65 mm, the coefficient µ of friction of the surface (magnetic surface) on which the magnetic material of the magnetic tape was provided was 0.15 to 0.35, the winding speed S of the magnetic tape was 2.8 to 4.8 m/second, and the depth H of the grooves 20 was 0.05 to 0.25 mm. Furthermore, the lower edge of the tape immediately before winding and the lower flange 9 were set so as to be positioned on the same plane.

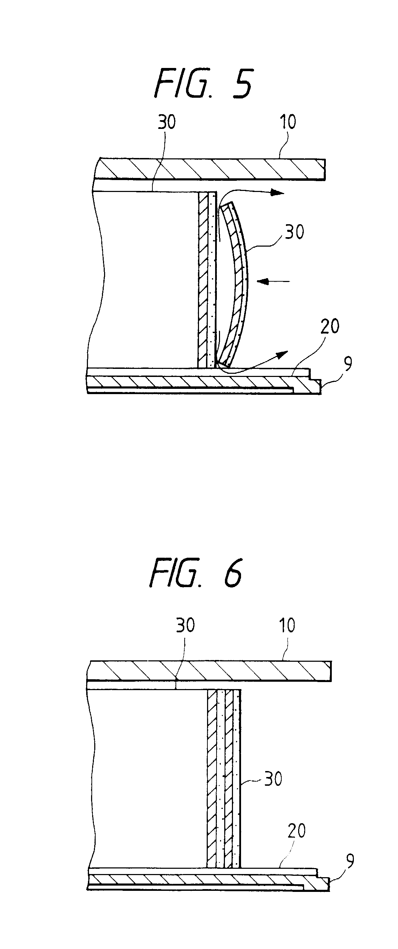

With regard to the tape reel 1 where the air discharge grooves 20 are provided on the inner surface of the lower flange 9, assume, for purposes of illustration, the case where the magnetic tape is wound at high speed at the time of manufacture of, for example, a magnetic tape cassette. As shown in Fig. 5, when the oncoming portion of the magnetic tape 30 is wound onto the already wound portion of the magnetic tape 30, the air interposed between portions of the magnetic tape is compressed due to the tension applied to the oncoming magnetic tape 30 which is being wound and due to the pressure of the magnetic tape 30 which is further wound on the top of this, and the air is discharged to the outside from the gap between the upper flange 10 and the upper edge of the magnetic tape 30, and is discharged to the outer periphery of the lower flange 9 through the grooves 20.

Thus, since the air in the magnetic tape 30 is discharged faster in comparison with the conventional tape reel 40 which is not provided with the grooves 20 (Fig. 8), winding hardness is stable, and since the lubrication action of the air is reduced and the oncoming magnetic tape 30 being wound is urged to the lower flange 9 side by gravity, it is possible to prevent the upward displacement of the oncoming portion of the magnetic tape 30 being wound. As a result, as shown in Fig. 6, the upper edges of the already wound portion of the magnetic tape 30 and the oncoming portion of the magnetic tape 30 being wound are kept even, and it becomes possible to have an excellent winding attitude. This is not limited to the time of manufacture of magnetic tape cassettes, and even in the case where a magnetic tape cassette is loaded into a VTR and the fast-forward or rewind operation is conducted, there is the effect that the winding attitude of the magnetic tape improves. Furthermore, when the winding attitude of the magnetic tape 30 improves, since up-and-down movement of the magnetic tape 30 is eliminated when using the magnetic tape cassette, the running of the magnetic tape 30 improves, and it becomes possible to prevent the occurrence of jamming, and so on.

With regard to the above-mentioned tape reel 1, since it is possible to have a good winding attitude without the use of the conventional unwoven cloth or magnet, or the like, even in the case where the magnetic tape 30 is wound at high speed, it becomes possible to simplify the configuration of the manufacturing equipment and reduce costs. Similarly, if a magnetic tape cassette using the above-mentioned tape reel 1 is used in a VTR, etc., even in the case where high-speed winding is conducted in the fast-forward mode or rewind mode, it is possible to have a good winding attitude of the magnetic tape 30 without providing any special parts in the magnetic tape cassette.

Furthermore, with the present invention, since the standard value of the opening area of the groove 20 is clear-cut or distinct, it is possible to economize labor at the time of design and manufacture of the tape reel 1 compared to conventional tape reels, with the result that cost reduction becomes possible. At the time of manufacture, winding can be conducted while urging the magnetic tape 30 to the lower flange 9 side by a simple method.

As the material of the lower flange 9, it is possible to use resins such as polyoxymethylene (POM), high-impact polystyrene (HIPS), or the like, and as the material of the upper flange 10, on the other hand, it is possible to use resins such as acrylonitrile styrene (AS), general-purpose polystyrene (GPPS), or the like.

A description has been made above regarding the foregoing embodiment for the case where the width B of the grooves 20 is identical from the inner periphery to the outer periphery of the reel, but, as shown in Fig. 7, which is a preferred embodiment of the invention, it is also possible to have the width of the grooves 22 in the circumferential direction of the reel gradually widen along the radial direction from the inner periphery (B1) to the outer periphery (B2) of the reel. Now, in the case where the magnetic tape 30 is wound while keeping the rotational speed of the tape reel 1 constant, since the circumferential speed at the outer periphery of the tape reel 1 becomes faster than at the inner periphery, the winding speed S becomes faster as the winding of the magnetic tape 30 progresses. At this time, since the discharge speed of the air in the magnetic tape 30 becomes faster at the outer periphery than at the inner periphery if the groove 22 becomes wider toward the outer periphery as in the present embodiment, it also becomes possible to have a good winding attitude of the magnetic tape 30 at the outer periphery where the winding speed S becomes high.

A description has been made about each of the foregoing embodiments for the case where the grooves 20 and 22 are provided in the lower flange 9, but in the case where the upper edge of the magnetic tape 30 contacts the inner surface of the upper flange 10, it is also possible to provide the grooves 20 and 22 on the inner surface of the upper flange 10. Furthermore, it is also acceptable to provide the grooves 20 and 22 in both the upper and lower flanges 10 and 9.

It is not necessary to define the number of the grooves formed on each flange be four as shown in Figs. 1 and 7. The number of the grooves may be preferably selected from a range of three to ten. However, the number of the grooves may be over ten.

A description has been made about the foregoing embodiments for the case where the present invention is applied to the tape reel 1 used in a magnetic tape cassette, but the present invention is not limited thereto, and can, of course, be applied to various types of tape reels such as open reels, or the like.

As explained above, with regard to a tape reel provided with a cylindrical tape winding face on which a magnetic tape is wound and with upper and lower flanges on the upper and lower ends of the tape winding face, the present invention provides grooves, which are designed to discharge to the outer periphery of the upper and lower flanges the air interposed between portions of the magnetic tape which is wound on the tape winding face, in the inner surface of at least one of the upper and lower flanges which are contacted by the magnetic tape. Consequently, even in the case where the winding speed of the magnetic tape is high, for example, in the case of manufacture of magnetic tape cassettes with the present type of tape reels, or in the case of the use of the magnetic tape cassette with the present type of tape reels in the fast-forward mode or rewind mode, it is possible to have a good winding attitude of the magnetic tape without using special parts such as unwoven cloth or a magnet, or the like, and it is possible to simplify the configuration of the manufacturing equipment and the tape reels, and reduce costs.

Since the present invention has been made so that the opening area of the grooves lying within the range where the magnetic tape is wound on the inner surface is 30 percent or more of the area of the range where the magnetic tape is wound, the standard value of the opening area of the grooves is clear so that the dimensions of the shape of the grooves can be easily determined. Consequently, it is possible to economize labor at the time of design and manufacture of the tape reels, and cost reduction also becomes possible.

Furthermore, the present invention can be made so that the grooves widen from the inner periphery to the outer periphery of the upper and lower flanges. By this means, since the speed with which the air between portions of the magnetic tape is discharged to the outside through the grooves becomes faster at the outer periphery than at the inner periphery, in the case where the winding speed of the magnetic tape becomes fast at the outer periphery of the tape reel as when the magnetic tape is wound while the rotational frequency of the tape reel is constant, it is possible to have a good overall winding attitude from the inner periphery to the outer periphery.

It is contemplated that numerous modifications may be made to the tape reel of the present invention without departing from the scope of the invention as defined in the following claims.

## Claims

1. A tape reel (1) having a cylindrical tape winding face (8) on which magnetic tape (30) is to be wound, and upper and lower flanges (10,9) formed at upper and lower ends of said tape winding face (8), each of said upper and lower flanges (10,9) having an inner and an outer periphery, said tape reel (1) further comprising at least one groove (20,22) provided in an inner surface of at least one of said upper and lower flanges (10,9) which are contacted by the magnetic tape (30) so that air interposed in between parts of the magnetic tape (30) wound on said tape winding face (8) is discharged through said at least one groove (20,22) to the outer periphery of said at least one of said upper and lower flanges (10,9); **characterized in that** an opening area of said at least one groove (20,22) is 40 to 80% of the total area of the tape winding range.

2. The tape reel according to claim 1, wherein a width of said at least one groove (20,22) in a circumferential direction of said tape reel (1) is widened from the inner periphery of said at least one of said upper and lower flanges (10,9) toward the outer periphery of said at least one of said upper and lower flanges (10,9).

3. The tape reel according to claim 1 or 2, wherein said at least one groove comprises four to ten grooves (20,22) which are provided at equal intervals along a circumferential direction of said at least one of said upper and lower flanges (10,9).

4. The tape reel according to one of claims 1 to 3, wherein said at least one groove (20,22) extends radially from said inner periphery to said outer periphery, and said at least one groove (20,22) has a fan-shape with its width in the circumferential direction of the reel gradually widening along the radial direction from the inner periphery to the outer periphery of the reel.

5. The tape reel according to at least one of claims 1 to 4, wherein said at least one groove (20,22) includes upper end edges (23) which are rounded (R).

6. A tape cassette containing a pair of tape reels (1), each of said tape reels (1) having a cylindrical tape winding face (8) on which magnetic tape is to be wound, and upper and lower flanges (10,9) formed at upper and lower ends of said tape winding face (8), each of said upper and lower flanges (10,9) having an inner and an outer periphery, said tape reels (1) further comprising at least one groove (20,22) provided in an inner surface of at least one of said upper and lower flanges (10,9) which are contacted by the magnetic tape (30) so that air interposed in between parts of the magnetic tape (30) wound on said tape winding face (8) is discharged through said at least one groove (20) to the outer periphery of said at least one of said upper and lower flanges, **characterized in that** an opening area of said at least one groove (20,22) is 40 to 80% of the total area of the tape winding range.

7. The tape cassette according to claim 6, wherein a width of said at least one groove (20,22) in a circumferential direction of said tape reel (1) is widened from the inner periphery of said at least one of said upper and lower flanges (10,9) toward the outer periphery of said at least one of said upper and lower flanges (10,9).

8. The tape cassette according to claim 6, wherein said at least one groove comprises four to ten grooves (20,22) which are provided at equal intervals along a circumferential direction of at least one of said upper and lower flanges (10,9).

9. The tape cassette according to at least one of claims 6 to 8, wherein said at least one groove (20,22) extends radially from said inner periphery to said outer periphery, and said at least one groove (20,22) has a fan-shape with its width in the circumferential direction of the reel gradually widening along the radial direction from the inner periphery to the outer periphery of the reel.

10. The tape cassette according to at least one of claims 6 to 9, wherein said at least one groove (20,22) includes upper end edges (23) which are rounded (R).

## Patentansprüche

1. Bandspule (1) mit einer zylindrischen Bandaufspulfläche (8), auf die das Magnetband (30) aufgespult wird, und einem oberen und einem unteren Flansch (10, 9) am oberen und unteren Ende der Bandaufspulfläche (8), wobei jeder von dem oberen und unteren Flansch (10, 9) einen Innen- und einen Außenrand hat, wobei die Bandspule (1) weiterhin mindestens einen Schlitz (20, 22) in einer Innenfläche von zumindest entweder dem oberen oder dem unteren Flansch (10, 9) umfaßt, welche das Magnetband (30) berührt, so daß zwischen Teilen des auf die Bandaufspulfläche (8) aufgewickelten Magnetbandes (30) befindliche Luft durch mindestens den einen Schlitz (20, 22) an den Außenrand von zumindest entweder dem oberen oder dem unteren Flansch (10, 9) abgegeben wird, **dadurch gekennzeichnet, daß** eine Öffnungsfläche von dem mindestens einen Schlitz (20, 22) 40 bis 80 % der Gesamtfläche des Bandaufspulbereiches ausmacht.

2. Bandspule nach Anspruch 1, wobei die Breite von dem mindestens einen Schlitz (20, 22) in Umfangsrichtung der Bandspule (1) vom Innenrand von zumindest entweder dem oberen oder dem unteren Flansch (10, 9) zum Außenrand von zumindest entweder dem oberen oder dem unteren Flansch (10, 9) zunimmt.

3. Bandspule nach Anspruch 1 oder 2, wobei der mindestens eine Schlitz vier bis zehn Schlitze (20, 22) umfaßt, die in gleichmäßigem Abstand zueinander in Umfangsrichtung von zumindest dem oberen oder unteren Flansch (10, 9) vorgesehen sind.

4. Bandspule nach einem der Ansprüche 1 bis 3, wobei der mindestens eine Schlitz (20, 22) radial vom Innenrand zum Außenrand verläuft, und wobei der mindestens eine Schlitz (20, 22) fächerförmig ist und in Umfangsrichtung der Spule entlang der radialen Richtung vom Innenrand zum Außenrand der Spule allmählich breiter wird.

5. Bandspule nach mindestens einem der Ansprüche 1 bis 4, wobei der mindestens eine Schlitz (20, 22) obere Endkanten (23) aufweist, die abgerundet sind (R).

6. Bandkassette mit einem darin befindlichen Paar von Bandspulen (1), wobei jede der Bandspulen (1) umfaßt: eine zylindrische Bandaufspulfläche (8), auf die Magnetband aufgespult wird, und einen oberen und einen unteren Flansch (10, 9) am oberen und unteren Ende der Bandaufspulfläche (8), wobei jeder von dem oberen und unteren Flansch (10, 9) einen Innen- und einen Außenrand hat, wobei die Bandspule (1) weiterhin mindestens einen Schlitz (20, 22) in einer Innenfläche von zumindest entweder dem oberen oder dem unteren Flansch (10, 9) umfaßt, welche das Magnetband (30) berührt, so daß zwischen Teilen des auf die Bandaufspulfläche (8) aufgewickelten Magnetbandes (30) befindliche Luft durch mindestens einen Schlitz (20) an den Außenrand von zumindest entweder dem oberen oder dem unteren Flansch (10, 9) abgegeben wird, **dadurch gekennzeichnet, daß** eine Öffnungsfläche von dem mindestens einen Schlitz (20, 22) 40 bis 80 % der Gesamtfläche des Bandaufspulbereiches ausmacht.

7. Bandkassette nach Anspruch 6, wobei die Breite von dem mindestens einen Schlitz (20, 22) in Umfangsrichtung der Bandspule (1) vom Innenrand von zumindest entweder dem oberen oder dem unteren Flansch (10, 9) zum Außenrand von zumindest entweder dem oberen oder dem unteren Flansch (10, 9) zunimmt.

8. Bandkassette nach Anspruch 6, wobei der mindestens eine Schlitz vier bis zehn Schlitze (20, 22) umfaßt, die in gleichmäßigem Abstand zueinander in Umfangsrichtung von zumindest dem oberen oder dem unteren Flansch (10, 9) vorgesehen sind.

9. Bandkassette nach mindestens einem der Ansprüche 6 bis 8, wobei der mindestens eine Schlitz (20, 22) radial vom Innenrand zum Außenrand verläuft, und wobei der mindestens eine Schlitz (20, 22) fächerförmig ist und in Umfangsrichtung der Spule entlang der radialen Richtung vom Innenrand zum Außenrand der Spule allmählich breiter wird.

10. Bandkassette nach mindestens einem der Ansprüche 6 bis 9, wobei der mindestens eine Schlitz (20, 22) obere Endkanten (23) aufweist, die abgerundet sind (R).

## Revendications

1. Bobine de bande (1) ayant une face d'enroulement de bande cylindrique (8) sur laquelle une bande magnétique (30) doit être enroulée, et des flasques supérieur et inférieur (10, 9) formés au niveau des extrémités supérieure et inférieure de ladite face d'enroulement de bande (8), chacun desdits flasques supérieur et inférieur (10, 9) ayant une périphérie intérieure et une périphérie extérieure, ladite bobine de bande (1) comportant en outre au moins une rainure (20, 22) prévue dans une surface interne d'au moins un desdits flasques supérieur et inférieur (10, 9) qui sont en contact avec la bande magnétique (30) de sorte que l'air interposé entre des parties de la bande magnétique (30) enroulée sur ladite face d'enroulement de bande (8) est évacué à travers ladite au moins une rainure (20, 22) vers la périphérie extérieure dudit au moins un desdits flasques supérieur et inférieur (10, 9); caractérisée en ce qu'une surface d'ouverture de ladite au moins une rainure (20, 22) est de 40 à 80 % de la surface totale de la plage d'enroulement de bande.

2. Bobine de bande selon la revendication 1, dans laquelle une largeur de ladite au moins une rainure (20, 22) dans une direction circonférentielle de ladite bobine de bande (1) est élargie depuis la périphérie intérieure dudit au moins un desdits flasques supérieur et inférieur (10, 9) jusqu'à la périphérie extérieure dudit au moins un desdits flasques supérieur et inférieur (10, 9).

3. Bobine de bande selon la revendication 1 ou 2, dans laquelle ladite au moins une rainure comporte de quatre à dix rainures (20, 22) qui sont prévues à des intervalles égaux le long d'une direction circonférentielle dudit au moins un desdits flasques supérieur et inférieur (10, 9).

4. Bobine de bande selon l'une des revendications 1 à 3, dans laquelle ladite au moins une rainure (20, 22) s'étend radialement depuis ladite périphérie intérieure jusqu'à ladite périphérie extérieure, et ladite au moins une rainure (20, 22) a une forme en éventail avec sa largeur dans la direction circonférentielle de la bobine qui s'élargit progressivement le long de la direction radiale depuis la périphérie intérieure jusqu'à la périphérie extérieure de la bobine.

5. Bobine de bande selon au moins une des revendications 1 à 4, dans laquelle ladite au moins une rainure (20, 22) comprend des bords d'extrémité supérieure (23) qui sont arrondis (R).

6. Cassette à bande contenant une paire de bobines de bande (1), chacune desdites bobines de bande (1) ayant une face d'enroulement de bande cylindrique (8) sur laquelle une bande magnétique doit être enroulée, et des flasques supérieur et inférieur (10, 9) formés au niveau des extrémités supérieure et inférieure de ladite face d'enroulement de bande (8), chacun desdits flasques supérieur et inférieur (10, 9) ayant une périphérie intérieure et une périphérie extérieure, lesdites bobines de bande (1) comportant en outre au moins une rainure (20, 22) prévue dans une surface interne d'au moins un desdits flasques supérieur et inférieur (10, 9) qui sont en contact avec la bande magnétique (30) de sorte que l'air interposé entre des parties de la bande magnétique (30) enroulée sur ladite face d'enroulement de bande (8) est évacué à travers ladite au moins une rainure (20, 22) vers la périphérie extérieure dudit au moins un desdits flasques supérieur et inférieur (10, 9); caractérisée en ce qu'une surface d'ouverture de ladite au moins une rainure (20, 22) est de 40 à 80 % de la surface totale de la plage d'enroulement de bande.

7. Cassette à bande selon la revendication 6, dans laquelle une largeur de ladite au moins une rainure (20, 22) dans une direction circonférentielle de ladite bobine de bande (1) est élargie depuis la périphérie intérieure dudit au moins un desdits flasques supérieur et inférieur (10, 9) jusqu'à la périphérie extérieure dudit au moins un desdits flasques supérieur et inférieur (10, 9).

8. Cassette à bande selon la revendication 6, dans laquelle ladite au moins une rainure comporte de quatre à dix rainures (20, 22) qui sont prévues à des intervalles égaux le long d'une direction circonférentielle dudit au moins un desdits flasques supérieur et inférieur (10, 9).

9. Cassette à bande selon au moins une des revendications 6 à 8, dans laquelle ladite au moins une rainure (20, 22) s'étend radialement depuis ladite périphérie intérieure jusqu'à ladite périphérie extérieure, et ladite au moins une rainure (20, 22) a une forme en éventail avec sa largeur dans la direction circonférentielle de la bobine qui s'élargit progressivement le long de la direction radiale depuis la périphérie intérieure jusqu'à la périphérie extérieure de la bobine.

10. Cassette à bande selon au moins une des revendications 6 à 9, dans laquelle ladite au moins une rainure (20, 22) comprend des bords d'extrémité supérieure (23) qui sont arrondis (R).
